# EUROPEAN PATENT APPLICATION

(11) **EP 3 185 516 A1**
(43) Date of publication of application: **28.06.2017**
(21) Application number: 15843590.9
(22) Date of filing: 31.08.2015
(51) Int. Cl.: H04L 29/12

(54) **ADDRESS PROCESSING METHOD, RELATED DEVICE AND SYSTEM**

(30) Priority: 23.09.2014 CN 201410489460
(71) Applicant: Huawei Technologies Co., Ltd., Longgang District Shenzhen, Guangdong 518129 (CN)
(72) Inventor: TENG, Xindong, Shenzhen Guangdong 518129 (CN)
(74) Representative: Epping - Hermann - Fischer
(86) International application number: PCT/CN2015/088613
(87) International publication number: WO 2016/045483

(57) **Abstract**

Embodiments of the present invention disclose an address processing method, including: receiving, by an address allocation device, an address allocation request sent by a service node, where the address allocation request includes a quantity N of addresses required by the service node, and N is an integer greater than 0; querying whether there are one or more address blocks in an idle state whose lengths are greater than or equal to N in a global address pool, if yes, selecting, from the one or more address blocks in an idle state whose lengths are greater than or equal to N, an address block whose length is N as a target address block; allocating the target address block to the service node, and setting the target address block to an occupied state; obtaining recycling information reported by the service node when a preset recycling trigger condition is met, where the recycling information is used to indicate a location of a recycling address block in an idle state in a local address pool; and determining, according to the recycling information, an address block that is in the global address pool and corresponding to the recycling address block, and setting the corresponding address block to an idle state. The embodiments of the present invention further disclose a related device and system. The present invention may improve address utilization.

## Description

This application claims priority to Chinese Patent Application No. CN 201410489460.5, filed with the Chinese Patent Office on September 23, 2014 and entitled "ADDRESS PROCESSING METHOD, RELATED DEVICE, AND SYSTEM", which is incorporated herein by reference in its entirety.

### TECHNICAL FIELD

The present invention relates to the computer field, and in particular, to an address processing method, a related device, and system.

### BACKGROUND

In an existing address allocation solution, after a network management layer allocates an address to each service node, each service node obtains independent management rights for the allocated address, and each service node can be independently responsible for allocation and release of a local address pool. When a user accesses a network, a service node allocates an IP address directly from a local address pool, and the user accesses the network by using the allocated address. When the user disconnects from the network, the service node recycles the address of the user to the local address pool, so that the address is to be used in next allocation. However, a disadvantage of this address allocation manner is as follows: A service node can use only a local address pool that belongs to the service node to perform address allocation or release for user equipment. All service nodes are different in processing overheads and a quantity of users. Therefore, a case in which address resources in a local address pool of one service node are strained while address resources in a local address pool of another service node are idle is likely to occur, and address utilization of the local address pools of all service nodes is not high.

### SUMMARY

Embodiments of the present invention provide an address processing method, an address allocation device, a service node, and an address allocation system, so that a problem that address utilization of a service node is not high in the prior art can be resolved.

To resolve the foregoing technical problem, the embodiments of the present invention provide an address processing method, including:
receiving, by an address allocation device, an address allocation request sent by a service node, where the address allocation request includes a quantity N of addresses required by the service node, and N is an integer greater than 0;
querying, by the address allocation device, whether there are one or more address blocks in an idle state whose lengths are greater than or equal to N in a global address pool, and if there are one or more address blocks in an idle state whose lengths are greater than or equal to N in the global address pool, selecting, from the one or more address blocks in an idle state whose lengths are greater than or equal to N, an address block whose length is N as a target address block;
allocating, by the address allocation device, the target address block to the service node, and setting the target address block to an occupied state, so that the service node updates a local address pool according to the target address block, and performs address allocation or release for user equipment based on the local address pool;
obtaining, by the address allocation device when a preset recycling trigger condition is met, recycling information reported by the service node, where the recycling information is used to indicate a location of a recycling address block in an idle state in the local address pool; and
determining, by the address allocation device according to the recycling information, an address block that is in the global address pool and corresponding to the recycling address block, and setting the corresponding address block to an idle state.

With reference to the first aspect, in a first possible implementation manner, the querying, by the address allocation device, whether there are one or more address blocks in an idle state whose lengths are greater than or equal to N in the global address pool includes:
searching, by moving a preset allocation sliding window, the global address pool for one or more address blocks in an idle state whose lengths are greater than or equal to N, where the allocation sliding window is a sliding block whose length is equal to M, M is an integer greater than 0, and N≥M.

With reference to the first aspect or the first possible implementation manner, in a second possible implementation manner, the selecting, from the one or more address blocks in an idle state whose lengths are greater than or equal to N, an address block whose length is N as a target address block further includes:
generating an index entry according to a header address, a tail address, a length, and a status identifier that are of the target address block, and saving the index entry, where the index entry is used to indicate a location and a status that are of the target address block.

A second aspect of the embodiments of the present invention provides an address allocation device, including:
a request receiving module, configured to receive an address allocation request sent by a service node, where the address allocation request includes a quantity N of addresses required by the service node, and N is an integer greater than 0;
a determining module, configured to query whether there are one or more address blocks in an idle state whose lengths are greater than or equal to N in a global address pool, and if there are one or more address blocks in an idle state whose lengths are greater than or equal to N in the global address pool, select, from the one or more address blocks in an idle state whose lengths are greater than or equal to N, an address block whose length is N as a target address block;
an address allocation module, configured to allocate the target address block to the service node, and set the target address block to an occupied state, so that the service node updates a local address pool according to the target address block, and performs address allocation or release for user equipment based on the local address pool;
an obtaining module, configured to: when a preset recycling trigger condition is met, obtain, by the address allocation device, recycling information reported by the service node, where the recycling information is used to indicate a location of a recycling address block in an idle state in the local address pool; and
a recycling module, configured to determine, according to the recycling information, an address block that is in the global address pool and corresponding to the recycling address block, and set the corresponding address block to an idle state.

With reference to the second aspect, in a first possible implementation manner, the determining module is specifically configured to search, by moving a preset allocation sliding window, the global address pool for one or more address blocks in an idle state whose lengths are greater than or equal to N, where the allocation sliding window is a sliding block whose length is equal to M, M is an integer greater than 0, and N≥M.

With reference to the second aspect or the first possible implementation manner, in a second possible implementation manner, the determining module is further configured to generate an index entry according to a header address, a tail address, a length, and a status identifier that are of the target address block, and save the index entry, where the index entry is used to indicate a location and a status that are of the target address block.

A third aspect of the embodiments of the present invention provides a service node, including:
a sending module, configured to send an address allocation request to an address allocation device;
a receiving module, configured to receive a target address block that is in the global address pool and returned by the address allocation device according to the address allocation request, and update a local address pool according to the target address block;
a processing module, configured to perform address allocation and release for user equipment based on the updated local address pool;
a generation module, configured to: when a preset recycling trigger condition is met, determine a recycling address block in an idle state in the local address pool, and generate recycling information according to the recycling address block, where the recycling information indicates a location of the recycling address block in an idle state in the local address pool; and
a report module, configured to report the recycling information to the address allocation device.

With reference to the third aspect, in a first possible implementation manner, the information generation module includes:
a query unit, configured to query whether there are one or more address blocks in an idle state whose lengths are greater than or equal to a preset length threshold in the local address pool; and
a selection unit, configured to: if a query result of the query unit is that there are one or more address blocks in an idle state whose lengths are greater than or equal to the preset length threshold in the local address pool, select, from the one or more address blocks in an idle state whose lengths are greater than or equal to the length threshold, a longest address block as the recycling address block.

With reference to the first possible implementation manner of the third aspect, in a second possible implementation manner, the query unit is specifically configured to search, by moving a preset recycling sliding window, the local address pool for one or more address blocks in an idle state whose lengths are greater than or equal to the length threshold, where the recycling sliding window is a sliding block whose length is equal to the length threshold.

A fourth aspect of the embodiments of the present invention provides an address allocation system, including any one of the foregoing address allocation device and any one of the foregoing service node.

Implementing the embodiments of the present invention has the following beneficial effects:
An address allocation device allocates, according to an address allocation request of a service node, a target address block in an idle state in a global address pool to the service node, and sets the target address block to an occupied state. The service node updates a local address pool according to the allocated target address block, and performs address allocation and release for user equipment based on the local address pool. When a preset recycling trigger condition is met, the address allocation device obtains recycling information reported by the service node, determines, according to the recycling information, an address block that is in the global address pool and corresponding to the recycling address block, and sets the address block to an idle state. The address block in an idle state in the global address pool may be allocated to another service node, thereby improving address resource utilization in the global address pool.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of an address processing method according to a first embodiment of the present invention;
FIG. 2 is a schematic flowchart of an address processing method according to a second embodiment of the present invention;
FIG. 3 is a schematic diagram of address recycling according to an embodiment of the present invention;
FIG. 4 is a schematic diagram of another address recycling according to an embodiment of the present invention;
FIG. 5 is a schematic diagram of still another address recycling according to an embodiment of the present invention;
FIG. 6 is a schematic structural diagram of an address allocation device according to a first embodiment of the present invention;
FIG. 7 is a schematic structural diagram of a service node according to an embodiment of the present invention;
FIG. 8 is a schematic structural diagram of a generation module in FIG. 7;
FIG. 9 is a schematic structural diagram of an address allocation device according to a second embodiment of the present invention;
FIG. 10 is a schematic structural diagram of a service node according to a second embodiment of the present invention; and
FIG. 11 is a schematic structural diagram of an address allocation system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention may be implemented based on an NFV (Network Function Virtualization, Network Functions Virtualization, NFV for short) architecture, and both an address allocation device and a service node are NFV devices. The service node implements network access or network disconnection processing on user equipment belonging to the service node, and the network access or network disconnection processing includes user access based on the DHCP (Dynamic Host Configuration Protocol, Dynamic Host Configuration Protocol, DNCP for short) or the PPPoE (Point to Point Protocol over Ethernet, Point-to-Point Protocol over Ethernet, PPPoE for short), user AAA (Authentication Authorization and Accounting, Authentication, Authorization and Accounting), and the like. When the user equipment accesses a network, the service node allocates an address from a configured address pool to the user equipment. When the user equipment disconnects from the network, the service node releases the address occupied by the user equipment to a local address pool.

Exemplarily, a vBNG (virtualization Broadband Network Gateway, virtual Broadband Network Gateway, vBNG for short) includes service nodes vNodes running on multiple physical servers. A vNode may be a service instance running on a virtual machine VM. When user equipment accesses one service node in the vBNG, the service node allocates an IP address from a local address pool to the user equipment, and the user equipment needs to obtain the IP address before accessing an external network. After the user equipment disconnects from the network, the service node releases the address of the user equipment to the local address pool. In addition, the service node may release an idle IP address in the local address pool to a global address pool, and an address allocation device may allocate the idle IP address to other user equipment that accesses the network.

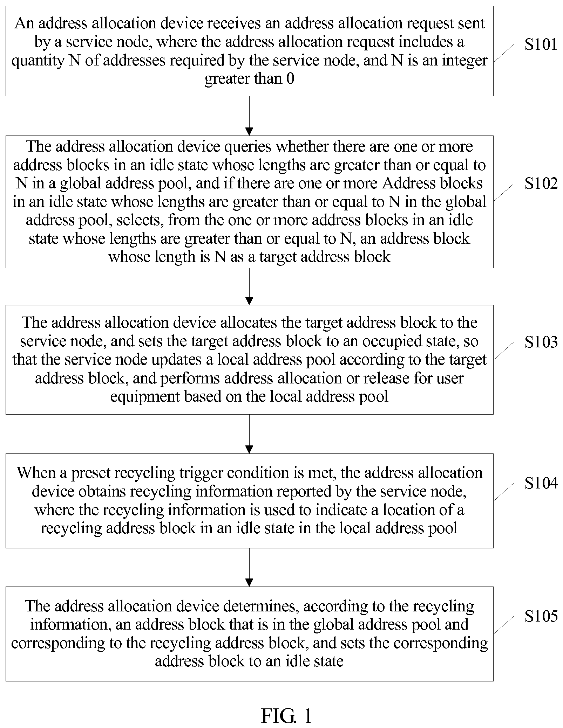

Referring to FIG. 1, FIG. 1 is a schematic flowchart of an address processing method according to a first embodiment of the present invention. In this embodiment of the present invention, the method includes the following steps.

S201. An address allocation device receives an address allocation request sent by a service node, where the address allocation request includes a quantity N of addresses required by the service node, and N is an integer greater than 0.

Specifically, the service node determines the quantity N of the required addresses according to a quantity of user equipments managed by the service node. The service node sends the address allocation request to the address allocation device. The address allocation device carries the quantity N of the required addresses, and N is an integer greater than 0. The address allocation device enables a subsequent address allocation process after receiving the address allocation request sent by the service node.

Exemplarily, the quantity of the user equipments managed by the service node is 100. If the service node uses a static address allocation policy, one address is fixedly allocated to each user equipment, and the quantity of the addresses required by the service node is 100. If the service node uses a dynamic address allocation policy, the quantity of the required addresses may be less than 100, assuming that it is 80. It is assumed that the service node uses a static address allocation policy and N=100. The service node sends an address allocation request to the address allocation device, and the address allocation request is used to request 100 addresses from the address allocation device.

S202. The address allocation device queries whether there are one or more address blocks in an idle state whose lengths are greater than or equal to N in a global address pool, and if there are one or more address blocks in an idle state whose lengths are greater than or equal to N in the global address pool, selects, from the one or more address blocks in an idle state whose lengths are greater than or equal to N, an address block whose length is N as a target address block.

Specifically, the global address pool is a set that includes several addresses, and an address may be an IP address or an IP address plus a port. The several addresses included in the global address pool are successively arranged together, for example, arranged in a form of a linked list. The several addresses included in the global address pool may not be arranged in ascending order or in descending order according to an address size. Certainly, for ease of management, the addresses in the global address pool may be in a mirror arrangement in ascending order or in descending order. Each address in the global address pool is associated with a status identifier indicating whether the address is in an occupied state or in an idle state. An idle state indicates that a corresponding address is not allocated and may be allocated to any service node. An occupied state indicates that a corresponding address is allocated to a service node and cannot be allocated to another service node. For example, the service node may use a bitmap bitmap form to identify a status of each address in the global address pool, "1" indicates that the address is in an occupied state, and "0" indicates that the address is in an idle state.

The address allocation device may traverse the status of each address in the global address pool according to the address allocation request. After finding an address block that is in an idle state, the address allocation device determines a length of the address block, to determine whether there are one or more address blocks in an idle state whose lengths are greater than or equal to N in the global address pool. It should be noted that, in this embodiment of the present invention, an address block includes at least one address, and addresses in the address block are adjacent in location. For example, the first address, the second address, and the third address that are arranged in order in the global address pool may be considered as an address block whose length is 3. An address block in an idle state refers to at least one address that is in an idle state and adjacent in location. An address block in an occupied state refers to at least one address that is in an occupied state and adjacent in location. If there are one or more address blocks whose lengths are greater than or equal to N in the global address pool, the address block whose length is N is selected as the target address block from the one or more address blocks in an idle state whose lengths are greater than or equal to N.

Exemplarily, N=100, and in an initial state, there are totally 1000 addresses in an idle state in the global address pool. In this case, the global address pool may be considered as an address block in an idle state whose length is 1000. If the address allocation device receives at this time the address allocation request of the service node for requesting to allocate 100 addresses, the address allocation device determines that there is an address block whose length is greater than or equal to 100 in the global address pool, and the address allocation device selects, from the address block in an idle state whose length is 1000, an address block whose length is 100 as the target address block. After address allocation and recycling are performed for a period of time, a status of an address in the global address pool may change. It is assumed that there are only two nonadjacent address blocks in an idle state in the current global address pool: one address block whose length is 98, and the other address block whose length is 103. If the address allocation device receives at this time the address allocation request of the service node for requesting to allocate 100 addresses, the address allocation device may determine, by means of calculation, that there is one address block in an idle state whose length is greater than or equal to 100 in the current global address pool, and the address allocation device selects, from the address block in an idle state whose length is 103, an address block whose length is 100 as the target address block.

Preferably, the address allocation device may search, by moving a preset allocation sliding window, the global address pool for one or more address blocks in an idle state whose lengths are greater than or equal to N. The allocation sliding window is a sliding block whose length is equal to M, M is an integer greater than 0, and N≥M. The length M of the allocation sliding window may be set by the address allocation device according to an actual requirement. A processing process is more flexible if a shorter allocation sliding window is set, but allocation times performed by the address allocation device may increase, resulting in low allocation efficiency. Therefore, the length of the allocation sliding window needs to be properly set, for example, may be set to 16, 32, 64, or 128, or the like. The address allocation device controls the allocation sliding window to move leftward or move rightward, and a moving step for moving the allocation sliding window may be one address or multiple addresses. An address block covered by the allocation sliding window may change after the allocation sliding window is moved, and a length of the address block covered by the allocation sliding window is equal to the length of the allocation sliding window.

In this embodiment of the present invention, there are two cases in which the address allocation device moves the allocation sliding window whose length is equal to M to search for the one or more address blocks in an idle state whose lengths are greater than or equal to N. Case 1, N=M, the address allocation device moves the allocation sliding window, and if an address block covered by the allocation sliding window is in an idle state, it indicates that the address allocation device finds an address block in an idle state whose length is N. Case 2, N>M, the address allocation device moves the allocation sliding window, and if an address block covered by the allocation sliding window is in an idle state, it indicates that an available location is found (that is, an address block in an idle state whose length is M is found). Based on the available location of the allocation sliding window, then an address block that is in an idle state and adjacent to the allocation sliding window is checked. The adjacent address block in an idle state is adjacent to a header address or a tail address of the allocation sliding window. If a length of the adjacent address block ≥ N-M, it indicates that the address allocation device finds an address block in an idle state whose length is greater than N in the global address pool.

It should be noted that, there is only one possible form for the target address block whose length is N and that is selected by the address allocation device from an address block in an idle state whose length is N, that is, the entire address block whose length is N is used as the target address block. When the address allocation device selects the target address block whose length is N from an address block in an idle state whose length is P, and P>N, the target address block selected by the address allocation device has P-N+1 possible forms. Preferably, the address allocation device uses a header address or a tail address of the address block in an idle state whose length is greater than N as a header address or a tail address of the target address block whose length is N, that is, the selected target address block whose length is N is adjacent to an address block in an occupied state in the global address pool, to reduce address fragments in the global address pool.

Exemplarily, it is assumed that there is an address block in an idle state whose length is 104 in the global address pool, and the quantity N of the addresses requested by the service node is 100, the address allocation device preferably selects, as the target address block, the address block including addresses from the first address to the 100^{th} address in the address block in an idle state whose length is 104, or selects, as the target address block, the address block including addresses from the fifth address to the 104^{th} address in the address block.

In some embodiments of the present invention, optionally, if there is no address block in an idle state whose length is N in the global address pool, a longest address block in an idle state in the global address pool is selected as the target address block.

Optionally, in some embodiments of the present invention, the global address pool may be a distributed database, the distributed database includes multiple distributed nodes, and related information of the global address pool is saved in the distributed database, such as a size of the global address pool, a status of an address, and a current location of the allocation sliding window. The related information is used as a data index entry and can be read and written by each service node. It needs to be ensured that data values in the distributed database are latest and consistent after different service nodes perform write operations or read operations. For processing of the distributed database, to improve service processing performance, data that needs to be frequently and locally processed by each service node may be buffered on each service node, and related information of a local address pool is saved in the buffered data.

S103. The address allocation device allocates the target address block to the service node, and sets the target address block to an occupied state, so that the service node updates a local address pool according to the target address block, and performs address allocation or release for user equipment based on the local address pool.

Specifically, the address allocation device allocates the target address block determined in S102 to the service node for using, and sets the target address block to an occupied state, so that the target address block cannot be allocated to another service node for using. The address allocation device may send an allocation message that includes the target address block to the service node, to notify the service node of the allocated target address block. The service node updates the local address pool according to the target address block. If the local address pool of the service node is empty, the service node uses the target address block as a local address pool. In this case, addresses in the local address pool, a quantity of the addresses, and an arrangement order are the same as those in the target address block. If the local address pool of the service node is not empty, the target address block is placed in front of a header address of the local address pool or behind a tail address of the local address pool to generate a new local address pool, and the target address block in the local address pool is set to an idle state. Based on the updated local address pool, the service node processes an access request and a disconnection request that are of user equipment that belongs to the service node. When the user equipment accesses a network, an address in the local address pool is allocated, and the allocated address is set to an occupied state. When the user equipment disconnects from the network, the address of the user equipment is released to the local address pool, and the address is set to an idle state.

Exemplarily, in an initial state, there are 1000 addresses in an idle state in the global address pool, that is, the global address pool may be considered as an address block in an idle state whose length is 1000. The 1000 addresses are numbered in order, an address ranked in the first place is recorded as an address 1, an address ranked in the second place is recorded as an address 2, and so on. The quantity N of the addresses requested by the service node is 100. The address allocation device selects an address block including addresses 1 to 100 as the target address block. The address allocation device sets an address status of each of the addresses 1 to 100 to an occupied state. The address allocation device allocates the target address block to the service node, and the service node updates the local address pool according to the target address block. At this time, if the local address pool of the service node is empty, an address in the local address pool is also the address block including the addresses 1 to 100, and an arrangement order is not changed. If the local address pool of the service node is not empty, the service node places the target address pool behind the tail address of the local address pool or in front of the header address of the local address pool. Based on an updated local address pool, the service node processes address allocation and release operations for the user equipment. Each address in the local address pool is associated with status information. When an address is allocated to the user equipment, the address is identified as an occupied state. When an address is not allocated to the user equipment, the address is identified as an idle state.

Optionally, in some embodiments of the present invention, the selecting, from the address blocks in an idle state whose lengths are greater than or equal to N, the address block whose length is N as the target address block further includes:
generating an index entry according to a header address, a tail address, a length, and a status identifier that are of the target address block, and saving the index entry, where the index entry is used to indicate a location and a status that are of the target address block.

Specifically, the address allocation device generates the index entry according to the header address, the tail address, the length, and the status identifier that are of the target address block, and the index entry is used to indicate the location of the target address block in the global address pool. According to the foregoing example, the target address block is the address block including the addresses 1 to 100 in the global address pool. The address allocation device obtains the header address being the address 1, the tail address being the address 100, the length 100, and the status identifier 1 (indicating an occupied state) that are of the target address block, and generates the index entry of the target address block according to the foregoing information. In this case, when the address allocation device moves the allocation sliding window for a next time to search for a target address block in an idle state, after the allocation sliding window is moved to a location, a header address or a tail address corresponding to the allocation sliding window is used as a query index to query whether there is a corresponding index entry. If there is a corresponding index entry, a corresponding length and status identifier are queried in the index entry according to the header address or the tail address. Because of a related parameter of an address block that is recorded as an occupied state in the index entry, the address allocation device may move the allocation sliding window for multiple address lengths according to the index entry, to improve search efficiency.

Exemplarily, in a current location, the header address of the allocation sliding window is the address 1, the address 1 is used as a query index, and an index entry corresponding to the address 1 is found in a preset database. The length 100 and the status identifier 1 (indicating an occupied state) that are associated with the address 1 are obtained from the index entry, and refer to the address block in an occupied state whose length is 100 and that uses the address 1 as a header address and the address 100 as a tail address in the global address pool. The address allocation device directly moves the allocation sliding window backward for 100 address lengths, places the header address of the allocation sliding window in a location of the address 100, and continuously searches the global address pool for a target address block that meets a condition and that is in an idle state. In this way, the allocation sliding window does not need to be moved by using one address as a moving step each time, thereby improving search efficiency.

S104. When a preset recycling trigger condition is met, the address allocation device obtains recycling information reported by the service node, where the recycling information is used to indicate a location of a recycling address block in an idle state in the local address pool.

Specifically, the preset recycling trigger condition may be timing duration that is set on a timer. After the address allocation device allocates the target address block to the service node, a timer is started, and a time length is preset on the timer. After the address allocation device detects that the time length preset on the timer expires, the address allocation device obtains the recycling information actively reported by the service node. Alternatively, after the time length preset on the timer expires, the address allocation device sends an instruction message to the service node to instruct the service node to report the recycling information. After the service node performs, based on the updated local address pool, the address allocation and release operations for several times in the preset time length, there may be an address block in an idle state in the local address pool. The recycling information is used to indicate a location of a recycling address block in an idle state in the local address pool, and the recycling information includes a header address, a tail address, and a length that are of the recycling address block.

It should be noted that, alternatively, a timing moment may be preset on the timer. When detecting that a current moment is the timing moment, the address allocation device obtains the recycling information actively reported by the service node, or sends an instruction message to the service node to instruct the service node to report the recycling information.

Exemplarily, the time length that is set on the timer is five minutes. After the address allocation device allocates the target address block to the service node, the service node starts the timer. After the time length of five minutes that is set on the timer expires, the address allocation device obtains the recycling information actively reported by the service node. After the service node performs the address allocation and release operations for several times in the five minutes, there may be an address block in an idle state in the local address pool. The service node searches the local address pool for a recycling address block that meets a condition. It is assumed that the recycling address block is an address block including addresses 51 to 100 in the local address pool. The service node generates recycling information according to a length 50, a header address (the address 51), and a tail address (the address 100) that are of the recycling address block, and reports the recycling information to the address allocation device.

S105. The address allocation device determines, according to the recycling information, an address block that is in the global address pool and corresponding to the recycling address block, and sets the corresponding address block to an idle state.

Specifically, the address allocation device determines, according to the recycling information, the address block that is in the global address pool and corresponding to the recycling address block, and sets the corresponding address block to an idle state. An address included in the recycling address block is the same as an address included in the corresponding address block in the global address block. After being set to an idle state, the address block that is in the global address pool and corresponding to the recycling address block may further be reallocated to another service node for using, thereby improving address utilization.

Exemplarily, it is assumed that the local address pool of the service node is the same as an address in the target address block. The address block that is in the global address pool and corresponding to the recycling address block determined by the service node is in the target address block. The address allocation device determines a location of an address block that is in the target address block and corresponding to the recycling address block, and updates the index entry.

It should be noted that, the address allocation device may repeatedly perform S104 to S105, that is, after the time length that is set on the timer expires, the address allocation device restarts the timer, and detects that the time length preset on the timer expires. A time length that is set on the timer each time may be equal or may not be equal. The address allocation device obtains the recycling information reported by the service node. The address allocation device determines, according to the recycling information, the address block that is in the global address pool and corresponding to the recycling address block, sets the corresponding address block to an idle state, and after all addresses in the local address pool of the service node are recycled to the global address pool, stops starting the timer.

In implementation of this embodiment of the present invention, an address allocation device allocates, according to an address allocation request of a service node, a target address block in an idle state in a global address pool to the service node, and sets the target address block to an occupied state. The service node updates a local address pool according to the allocated target address block, and performs address allocation and release for user equipment based on the local address pool. When a preset recycling trigger condition is met, the address allocation device obtains recycling information reported by the service node, determines, according to the recycling information, an address block that is in the global address pool and corresponding to the recycling address block, and sets the address block to an idle state. The address block in an idle state in the global address pool may be allocated to another service node, thereby improving address resource utilization in the global address pool.

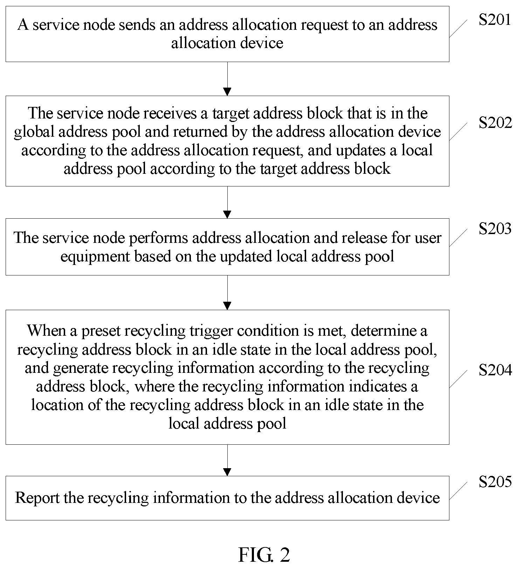

Referring to FIG. 2, FIG. 2 is a schematic flowchart of an address processing method according to a second embodiment of the present invention. In this embodiment of the present invention, the method includes the following steps.

S201. A service node sends an address allocation request to an address allocation device, where the address allocation request is used to request N addresses from the address allocation device.

Specifically, the service node receives a request that is sent by user equipment and for allocating an address, and queries whether there is an address in an idle state in a local address pool. If there is no address in an idle state in the local address pool, the service node sends the address allocation request to the address allocation device, where the address allocation request is used to request N addresses from the address allocation device, and N is an integer greater than 0. Alternatively, the service node sends the address allocation request to the address allocation device when detecting that a quantity of addresses in an idle state in the local address pool is less than a preset value.

S202. The service node receives a target address block that is in the global address pool and returned by the address allocation device according to the address allocation request, and updates a local address pool according to the target address block.

Specifically, the target address block is a set of addresses in the global address pool that are in an idle state and adjacent in location. The service node updates the local address pool according to the target address block. If the local address pool is empty before the service node receives the target address block, the service node uses the target address block as a local address pool. The local address pool is a copy of the target address pool, addresses included in the local address pool, a quantity of the addresses and an arrangement order are the same as those in the target address block. If the local address pool is not empty, the service node places the target address block in front of a header address of the local address pool or behind a tail address of the local address pool. Each address in the local address pool is associated with a status identifier indicating whether the address is in an occupied state or in an idle state. An idle state indicates that a corresponding address is not allocated to user equipment. An occupied state indicates that a corresponding address is allocated to user equipment.

S203. The service node performs address allocation and release for user equipment based on the updated local address pool.

The service node performs the address allocation or release for the user equipment based on the updated local address pool. For example, when the user equipment accesses a network, the service node allocates an address in an idle state from the local address pool to the user equipment. When the user equipment disconnects from the network, the service node recycles the address of the user equipment, and sets the address to an idle state. It should be noted that, the service node sequentially allocates an address in an idle state from the local address pool to user equipment, that is, a front address in an idle state is preferably allocated, to avoid excessive address fragments in the local address pool.

Exemplarily, there are eight addresses in the local address pool, and sequence numbers separately are an address 1 to an address 8. In a current moment, the address 1 to an address 3 are in an occupied state, and an address 4 to the address 8 are in an idle state. The service node allocates the address 4 to user equipment 1 after receiving a network access request of the user equipment 1. A status of the local address pool changes into the address 1 to the address 4 being in an occupied state, and an address 5 to the address 8 being in an idle state. In a next moment, the service node receives a network disconnection request of the user equipment 1, and sets the address 4 allocated to the user equipment 1 to an idle state. Consequently, the status of the local address pool changes into the address 1 to the address 3 being in an occupied state, and the address 4 to the address 8 being in an idle state. The service node allocates the address 4 to user equipment 3 if further receiving a network access request of the user equipment 3 at a moment after the next moment. A principle for allocating an address to user equipment by the service node is as follows: Each time an address needs to be allocated to the user equipment, the service node starts to query from a header address of the local address pool, and allocates an address in an idle state that is first found to the user equipment that requests. In this way, excessive address fragments are efficiently avoided in the local address pool.

S204. When a preset recycling trigger condition is met, determine a recycling address block in an idle state in the local address pool, and generate recycling information according to the recycling address block, where the recycling information indicates a location of the recycling address block in an idle state in the local address pool.

Specifically, the preset recycling trigger condition may be that the address allocation device sends an instruction message or that a time length of a preset timer expires. Afterwards, the service node determines the recycling address block in an idle state in the local address pool, and the recycling address block is a set of addresses in the local address pool that are in an idle state and adjacent in location. The service node generates the recycling information according to the recycling address block. The recycling information includes a header address, a tail address, and a length that are of the recycling address block and is used to indicate the location of the recycling address block in the local address pool.

Optionally, in some embodiments of the present invention, the service node queries whether there are one or more address blocks in an idle state whose lengths are greater than or equal to a length threshold in the local address pool, and selects, from the one or more address blocks in an idle state whose lengths are greater than or equal to the length threshold, a longest address block as the recycling address block. Certainly, any address block may be selected as the recycling address block from the one or more address blocks in an idle state whose lengths are greater than or equal to the length threshold.

If there is no address block in an idle state whose length is greater than or equal to the length threshold in the local address pool, it indicates that there are excessive address fragments in the local address pool. The service node does not allocate an address from the local address pool to user equipment, and only releases an address occupied by user equipment to the local address pool. When detecting that all addresses in the local address pool are in an idle state, the service node recycles the addresses in the local address pool to the global address pool. The address allocation device sets a status of each of addresses that are in the global address pool and corresponding to the local address pool to an idle state. After recycling is complete, the local address pool of the service node becomes empty, and in this way, the addresses in the local address pool can be allocated to another service node.

Optionally, the service node searches, by moving a preset recycling sliding window, the local address pool for one or more address blocks in an idle state whose lengths are greater than or equal to the length threshold, and the recycling sliding window is a sliding block whose length is equal to the length threshold. The service node queries, by moving an allocation sliding window, whether there are one or more address blocks in an idle state whose lengths are greater than or equal to the length threshold in the local address pool. The service node may control the recycling sliding window to move leftward or rightward, and a step for moving the recycling sliding window may be one address or multiple addresses. An address block covered by the recycling sliding window may change after the recycling sliding window is moved. For a process of moving the recycling sliding window to search the local address pool for the recycling address block, refer to the allocation process of the allocation sliding window.

S205. Report the recycling information to the address allocation device.

Specifically, the recycling information includes the header address, the tail address, and the length that are of the recycling address block, and the address allocation device may determine, according to the recycling information, an address block that is in the global address pool and corresponding to the recycling address block. After reporting the recycling information to the address allocation device, the service node may remove the recycling address block from the local address pool, or set an address in the recycling address block as a global address.

Exemplarily, the service node removes the recycling address block from the local address pool, uses addresses in the local address pool except the recycling address block as a new local address pool, and performs address allocation and release operations based on the new local address pool.

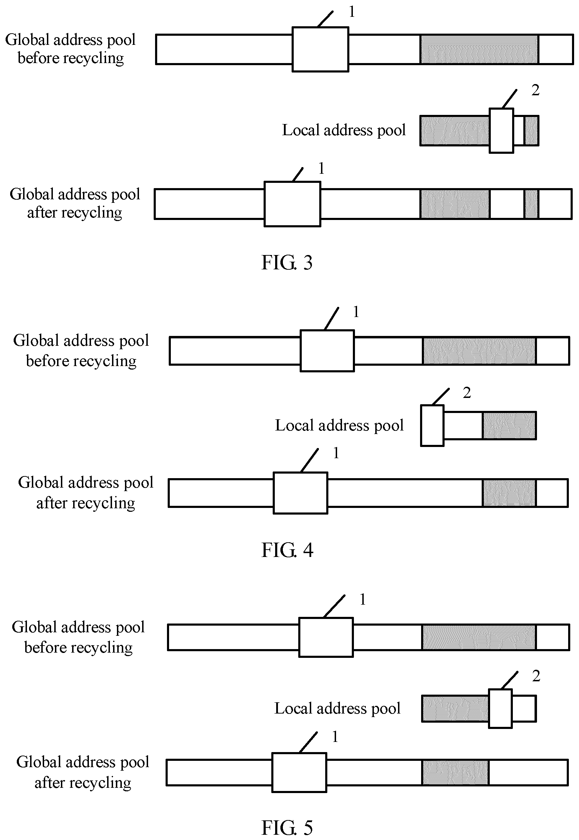

Referring to FIG. 3 to FIG. 5, a process of removing the recycling address block after the service node reports the recycling information is described. The addresses in the local address pool of the service node are the same as the addresses in the target address block allocated to the service node by the address allocation device, the allocation sliding window is numbered as 1, and the recycling allocation window is numbered as 2.

Referring to FIG. 3, a black part in the global address pool in the first figure represents the target address block allocated to the service node, the target address block is in an occupied state, and a white part represents an address in an idle state. In the second figure, the recycling address block in the local address pool is in a middle location. The third figure represents a case in which the global address pool recycles the recycling address block to the global address pool. The recycling address block in the global address pool is set to an idle state, and in this case, can be allocated to another service node. The service node removes the recycling address block from the local address pool, and updates the local address pool.

Referring to FIG. 4, a black part in the global address pool in the first figure represents the target address block allocated to the service node, the target address block is in an occupied state, and a white part represents an address in an idle state. In the second figure, the recycling address block in the local address pool is in a header location. The third figure represents a case in which the global address pool recycles the recycling address block to the global address pool. The recycling address block in the global address pool is set to an idle state, and in this case, can be allocated to another service node. The service node removes the recycling address block from the local address pool, and updates the local address pool.

Referring to FIG. 5, a black part in the global address pool in the first figure represents the target address block allocated to the service node, the target address block is in an occupied state, and a white part represents an address in an idle state. In the second figure, the recycling address block in the local address pool is in a tail location. The third figure represents a case in which the global address pool recycles the recycling address block to the global address pool. The recycling address block in the global address pool is set to an idle state, and in this case, can be allocated to another service node. The service node removes the recycling address block from the local address pool, and updates the local address pool.

In some embodiments of the present invention, optionally, before the service node reports the recycling information of the recycling address block to the address allocation device, if a length of an address block adjacent to the recycling address block is less than a length threshold, allocating an address from the adjacent address block is not allowed. After the adjacent address block is detected in an idle state, the adjacent address block is recycled to the global address pool.

Specifically, the adjacent address block is classified into the following cases according to a location of the recycling address block. The recycling address block is in a middle location, a header location, or a tail location. If the recycling address block is in the header location of the local address pool, there is only one adjacent address, that is, an address block behind the recycling address block. If a length of the rear address block is less than the length threshold, the service node does not allocate an address from the address block, but only releases an address. If the recycling address block is in the middle location of the local address pool, there are two adjacent addresses, that is, an address block in front of and an address block behind the recycling address block. If a length of the front address block or the rear address block is less than the length threshold, the service node does not allocate an address from the address block, but only releases an address. If the recycling address block is in the tail location of the local address pool, there is one adjacent address, that is, an address block behind the recycling address block. If a length of the rear address block is less than the length threshold, the service node does not allocate an address from the address block, but only releases an address. If an adjacent address block in front of or behind the recycling address block is in an idle state, the corresponding address block is recycled to the global address pool, and the address block recycled to the global address pool is removed from the local address pool or an address in the address block is set as a global address. In this way, address fragments in the local address pool may be efficiently reduced.

In implementation of this embodiment of the present invention, a service node receives a target address block allocated from a global address pool by an address allocation device, the service node merges the target address block with a local address pool, and processes, based on the local address pool, address allocation and release operations for user equipment. The service node periodically recycles an unallocated address to the global address pool. In this way, address resources being left unused can be avoided, and address allocation efficiency is efficiently improved.

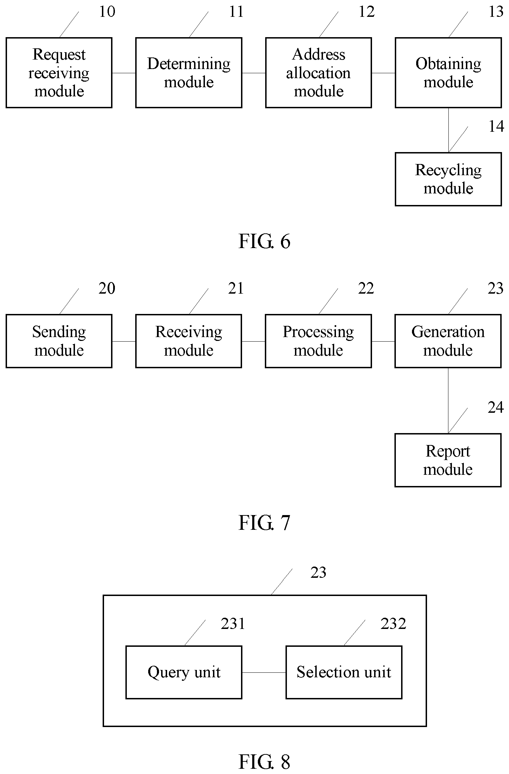

Referring to FIG. 6, FIG. 6 is a schematic structural diagram of an address allocation device according to a first embodiment of the present invention. In this embodiment of the present invention, the address allocation device includes: a request receiving module 10, a determining module 11, an address allocation module 12, an obtaining module 13, and a recycling module 14.

The request receiving module 10 is configured to receive an address allocation request sent by a service node, where the address allocation request includes a quantity N of addresses required by the service node, and N is an integer greater than 0.

The determining module 11 is configured to query whether there are one or more address blocks in an idle state whose lengths are greater than or equal to N in a global address pool, and if there are one or more address blocks in an idle state whose lengths are greater than or equal to N in the global address pool, select, from the one or more address blocks in an idle state whose lengths are greater than or equal to N, an address block whose length is N as a target address block.

The address allocation module 12 is configured to allocate the target address block to the service node, and set the target address block to an occupied state, so that the service node updates a local address pool according to the target address block, and performs address allocation or release for user equipment based on the local address pool.

The obtaining module 13 is configured to: when a preset recycling trigger condition is met, obtain, by the address allocation device, recycling information reported by the service node, where the recycling information is used to indicate a location of a recycling address block in an idle state in the local address pool.

The recycling module 14 is configured to determine, according to the recycling information, an address block that is in the global address pool and corresponding to the recycling address block, and set the corresponding address block to an idle state.

Optionally, the determining module 11 is specifically configured to search, by moving a preset allocation sliding window, the global address pool for one or more address blocks in an idle state whose lengths are greater than or equal to N, where the allocation sliding window is a sliding block whose length is equal to M, M is an integer greater than 0, and N≥M.

Optionally, the determining module 11 is further configured to generate an index entry according to a header address, a tail address, a length, and a status identifier that are of the target address block, and save the index entry, where the index entry is used to indicate a location and a status that are of the target address block.

This embodiment of the present invention and the first method embodiment are based on a same conception, and technical effects brought by this embodiment of the present invention and the first method embodiments are also the same. For details, refer to descriptions of the first method embodiment. Details are not described herein again.

Referring to FIG. 7, FIG. 7 is a schematic structural diagram of a service node according to a first embodiment of the present invention. In this embodiment of the present invention, the service node includes: a sending module 20, a receiving module 21, a processing module 22, a generation module 23, and a report module 24.

The sending module 20 is configured to send an address allocation request to an address allocation device.

Specifically, the sending module 20 receives a request that is sent by user equipment and for allocating an address, and queries whether there is an address in an idle state in a local address pool. If there is no address in an idle state in the local address pool, the sending module 20 sends the address allocation request to the address allocation device, where the address allocation request is used to request N addresses from the address allocation device, and N is an integer greater than 0. Alternatively, the sending module 20 sends the address allocation request to the address allocation device when detecting that a quantity of addresses in an idle state in the local address pool is less than a preset value.

The receiving module 21 is configured to receive a target address block that is in the global address pool and returned by the address allocation device according to the address allocation request, and update the local address pool according to the target address block.

Specifically, the target address block is a set of addresses in the global address pool that are in an idle state and adjacent in location. The service node updates the local address pool according to the target address block. If the local address pool is empty before the service node receives the target address block, the receiving module 21 uses the target address block as a local address pool. The local address pool is a copy of the target address pool, addresses included in the local address pool, a quantity of the addresses and an arrangement order are the same as those in the target address block. If the local address pool is not empty, the receiving module 21 places the target address block in front of a header address of the local address pool or behind a tail address of the local address pool. Each address in the local address pool is associated with a status identifier indicating whether the address is in an occupied state or in an idle state. An idle state indicates that a corresponding address is not allocated to user equipment. An occupied state indicates that a corresponding address is allocated to user equipment.

The processing module 22 is configured to perform address allocation and release for user equipment based on the updated local address pool.

The processing module 22 performs the address allocation or release for the user equipment based on the updated local address pool. For example, when the user equipment accesses a network, the processing module 22 allocates an address in an idle state from the local address pool to the user equipment. When the user equipment disconnects from the network, the processing module 22 recycles the address of the user equipment, and sets the address to an idle state. It should be noted that, the processing module 22 sequentially allocates an address in an idle state from the local address pool to user equipment, that is, a front address in an idle state is preferably allocated, to avoid excessive address fragments in the local address pool.

Exemplarily, there are eight addresses in the local address pool, and sequence numbers separately are an address 1 to an address 8. In a current moment, the address 1 to an address 3 are in an occupied state, and an address 4 to the address 8 are in an idle state. The processing module 22 allocates the address 4 to user equipment 1 after receiving a network access request of the user equipment 1. A status of the local address pool changes into the address 1 to the address 4 being in an occupied state, and an address 5 to the address 8 being in an idle state. In a next moment, the processing module 22 receives a network disconnection request of the user equipment 1, and sets the address 4 allocated to the user equipment 1 to an idle state. Therefore, the status of the local address pool changes into the address 1 to the address 3 being in an occupied state, and the address 4 to the address 8 being in an idle state. The processing module 22 allocates the address 4 to user equipment 3 if further receiving a network access request of the user equipment 3 at a moment after the next moment. A principle for allocating an address to user equipment by the processing module 22 is as follows: Each time an address needs to be allocated to the user equipment, the processing module 22 starts to query from a header address of the local address pool, and allocates an address in an idle state that is first found to the user equipment that requests. In this way, excessive address fragments are efficiently avoided in the local address pool.

The generation module 23 is configured to: when a preset recycling trigger condition is met, determine a recycling address block in an idle state in the local address pool, and generate recycling information according to the recycling address block, where the recycling information indicates a location of the recycling address block in an idle state in the local address pool.

Specifically, the preset recycling trigger condition may be that the address allocation device sends an instruction message or that a time length of a preset timer expires. Afterwards, the generation module 23 determines the recycling address block in an idle state in the local address pool, and the recycling address block is a set of addresses in the local address pool that are in an idle state and adjacent in location. The generation module 23 generates the recycling information according to the recycling address block. The recycling information includes a header address, a tail address, and a length that are of the recycling address block and is used to indicate the location of the recycling address block in the local address pool.

The report module 24 is configured to report the recycling information to the address allocation device.

Specifically, the recycling information includes the header address, the tail address, and the length that are of the recycling address block, and the address allocation device may determine, according to the recycling information, an address block that is in the global address pool and corresponding to the recycling address block. After reporting the recycling information to the address allocation device, the report module 24 may remove the recycling address block from the local address pool, or set an address in the recycling address block as a global address.

Further, optionally, referring to FIG. 8, the generation module 23 includes a query unit 231 and a selection unit 232.

The query unit 231 is configured to query whether there are one or more address blocks in an idle state whose lengths are greater than or equal to a preset length threshold in the local address pool.

The selection unit 232 is configured to: if a query result of the query unit is that there are one or more address blocks in an idle state whose lengths are greater than or equal to the preset length threshold in the local address pool, select, from the one or more address blocks in an idle state whose lengths are greater than or equal to the length threshold, a longest address block as the recycling address block.

Further, optionally, the query unit 231 is specifically configured to search, by moving a preset recycling sliding window, the local address pool for one or more address blocks in an idle state whose lengths are greater than or equal to the length threshold, where the recycling sliding window is a sliding block whose length is equal to the length threshold.

This embodiment of the present invention and the second method embodiment are based on a same conception, and technical effects brought by this embodiment of the present invention and the second method embodiment are also the same. For details, refer to descriptions of the second method embodiment. Details are not described herein again.

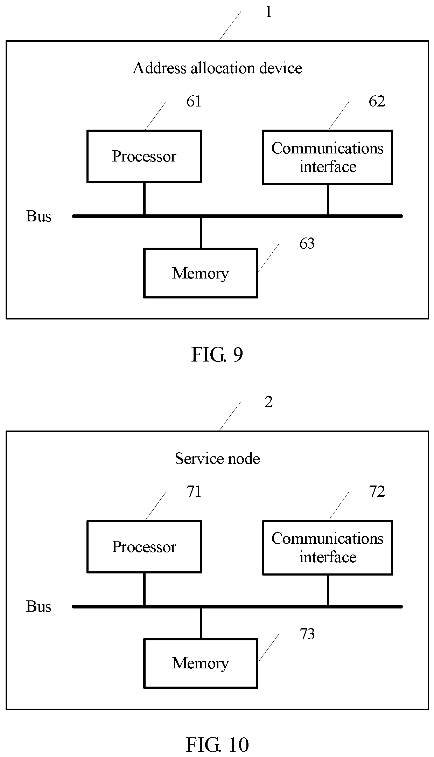

Referring to FIG. 9, FIG. 9 is a schematic structural diagram of an address allocation device according to a second embodiment of the present invention. In this embodiment of the present invention, the address allocation device includes a processor 61, a memory 62, and a communications interface 63. The communications interface 63 is configured to communicate with an external device. There may be one or more processors 61 in the address allocation device. In FIG. 9, for example, there is one processor. In some embodiments of the present invention, the processor 61, the memory 62, and the communications interface 63 may be connected by using a bus or in another manner. In FIG. 9, for example, a bus is used for connection.

The memory 62 saves a set of program code, and the processor 61 is configured to invoke the program code saved in the memory 62 to execute the following operations:
receiving an address allocation request sent by a service node, where the address allocation request includes a quantity N of addresses required by the service node, and N is an integer greater than 0;
querying whether there are one or more address blocks in an idle state whose lengths are greater than or equal to N in a global address pool, and if there are one or more address blocks in an idle state whose lengths are greater than or equal to N in the global address pool, selecting, from the one or more address blocks in an idle state whose lengths are greater than or equal to N, an address block whose length is N as a target address block;
allocating the target address block to the service node, and setting the target address block to an occupied state, so that the service node updates a local address pool according to the target address block, and performs address allocation or release for user equipment based on the local address pool;
obtaining, by the address allocation device when a preset recycling trigger condition is met, recycling information reported by the service node, where the recycling information is used to indicate a location of a recycling address block in an idle state in the local address pool; and
determining, according to the recycling information, an address block that is in the global address pool and corresponding to the recycling address block, and setting the corresponding address block to an idle state.

In some embodiments of the present invention, that the processor 61 executes the querying whether there are one or more address blocks in an idle state whose lengths are greater than or equal to N in a global address pool includes:
searching, by moving a preset allocation sliding window, the global address pool for one or more address blocks in an idle state whose lengths are greater than or equal to N, where the allocation sliding window is a sliding block whose length is equal to M, M is an integer greater than 0, and N≥M.

In some embodiments of the present invention, the processor 61 is further configured to execute the following operations:
generating an index entry according to a header address, a tail address, a length, and a status identifier that are of the target address block, and saving the index entry, where the index entry is used to indicate a location and a status that are of the target address block.

Referring to FIG. 10, FIG. 10 is a schematic structural diagram of a service node according to a second embodiment of the present invention. In this embodiment of the present invention, the service node includes a processor 71, a memory 72, and a communications interface 73. The communications interface 73 is configured to communicate with an external device. There may be one or more processors 71 in the service node. In FIG. 15, for example, there is one processor. In some embodiments of the present invention, the processor 71, the memory 72, and the communications interface 73 may be connected by using a bus or in another manner. In FIG. 10, for example, a bus is used for connection.

The memory 72 saves a set of program code, and the processor 71 is configured to invoke the program code saved in the memory 72 to execute the following operations:
sending an address allocation request to an address allocation device;
receiving a target address block that is in the global address pool and returned by the address allocation device according to the address allocation request, and updating a local address pool according to the target address block;
performing address allocation and release for user equipment based on the updated local address pool;
when a preset recycling trigger condition is met, determining a recycling address block in an idle state in the local address pool, and generating recycling information according to the recycling address block, where the recycling information indicates a location of the recycling address block in an idle state in the local address pool; and
reporting the recycling information to the address allocation device.

In some embodiments of the present invention, that the processor 71 executes the determining a recycling address block in an idle state in the local address pool includes:
querying whether there are one or more address blocks in an idle state whose lengths are greater than or equal to a preset length threshold in the local address pool; and
if a query result of the query unit is that there are one or more address blocks in an idle state whose lengths are greater than or equal to the preset length threshold in the local address pool, selecting, from the one or more address blocks in an idle state whose lengths are greater than or equal to the length threshold, a longest address block as the recycling address block.

In some embodiments of the present invention, that the processor 71 executes the querying whether there are one or more address blocks in an idle state whose lengths are greater than or equal to a preset length threshold in the local address pool includes:
searching, by moving a preset recycling sliding window, the local address pool for one or more address blocks in an idle state whose lengths are greater than or equal to the length threshold, where the recycling sliding window is a sliding block whose length is equal to the length threshold.

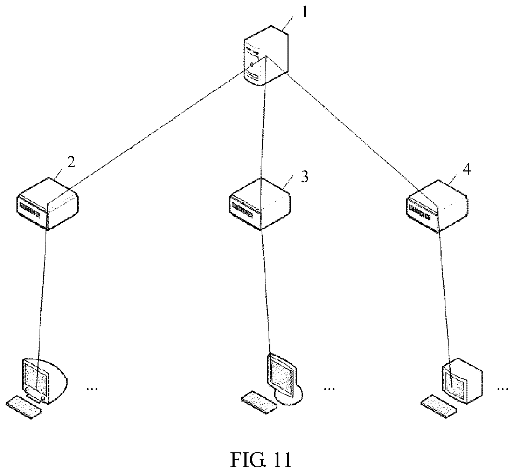

Referring to FIG. 11, FIG. 11 is a schematic structural diagram of an address allocation system according to an embodiment of the present invention. In this embodiment of the present invention, an address allocation device is responsible for address allocation and recycling for at least one service node, and each service node is responsible for address allocation and release for multiple user equipments. In this embodiment of the present invention, an address allocation device is responsible for address allocation and recycling for three service nodes. The following describes an operation principle of the address allocation system by using an example in which the address allocation device performs address allocation and recycling for a service node 2.

An address allocation device 1 receives an address allocation request sent by the service node 2, and the address allocation request includes a quantity N of addresses required by the service node 2. The address allocation device 1 determines a target address block in an idle state whose length is N in a global address pool. The address allocation device 1 allocates the target address block to the service node 2, and sets the target address block to an occupied state. The service node 2 receives the target address block allocated by the address allocation device 1. The service node 2 updates a local address pool according to the target address block, and performs address allocation and release based on an updated local address pool. The service node 2 determines a recycling address block in an idle state in the local address pool according to an instruction message sent by the address allocation device or when detecting that a preset time length expires. The service node 2 generates recycling information according to the recycling address block, reports the recycling information to the address allocation device 1, and removes the recycling address block from the local address pool or sets an address in the recycling address block as a global address. The address allocation device 1 obtains the recycling information reported by the service node 2. The address allocation device 1 determines, according to the recycling information, an address block that is in the global address pool and corresponding to the recycling address block, and sets the corresponding address block to an idle state. In this way, the address allocation device 1 may reallocate an address in an idle state on the service node 2 to a service node 1 or 3, or certainly, may reallocate to the service node 2, thereby improving address utilization.

A person of ordinary skill in the art may understand that all or some of the processes of the methods in the embodiments may be implemented by a computer program instructing relevant hardware. The program may be saved in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. An address processing method, comprising:
receiving, by an address allocation device, an address allocation request sent by a service node, wherein the address allocation request comprises a quantity N of addresses required by the service node, and N is an integer greater than 0;
querying, by the address allocation device, whether there are one or more address blocks in an idle state whose lengths are greater than or equal to N in a global address pool, and if there are one or more address blocks in an idle state whose lengths are greater than or equal to N in the global address pool, selecting, from the one or more address blocks in an idle state whose lengths are greater than or equal to N, an address block whose length is N as a target address block;
allocating, by the address allocation device, the target address block to the service node, and setting the target address block to an occupied state, so that the service node updates a local address pool according to the target address block, and performs address allocation or release for user equipment based on the local address pool;
obtaining, by the address allocation device when a preset recycling trigger condition is met, recycling information reported by the service node, wherein the recycling information is used to indicate a location of a recycling address block in an idle state in the local address pool; and
determining, by the address allocation device according to the recycling information, an address block that is in the global address pool and corresponding to the recycling address block, and setting the corresponding address block to an idle state.

2. The method according to claim 1, wherein the querying, by the address allocation device, whether there are one or more address blocks in an idle state whose lengths are greater than or equal to N in the global address pool comprises:
searching, by moving a preset allocation sliding window, the global address pool for one or more address blocks in an idle state whose lengths are greater than or equal to N, wherein the allocation sliding window is a sliding block whose length is equal to M, M is an integer greater than 0, and N≥M.

3. The method according to claim 1 or 2, wherein the selecting, from the one or more address blocks in an idle state whose lengths are greater than or equal to N, an address block whose length is N as a target address block further comprises:
generating an index entry according to a header address, a tail address, a length, and a status identifier that are of the target address block, and saving the index entry, wherein the index entry is used to indicate a location and a status that are of the target address block.

4. An address allocation device, comprising:
a request receiving module, configured to receive an address allocation request sent by a service node, wherein the address allocation request comprises a quantity N of addresses required by the service node, and N is an integer greater than 0;
a determining module, configured to query whether there are one or more address blocks in an idle state whose lengths are greater than or equal to N in a global address pool, and if there are one or more address blocks in an idle state whose lengths are greater than or equal to N in the global address pool, select, from the one or more address blocks in an idle state whose lengths are greater than or equal to N, an address block whose length is N as a target address block;
an address allocation module, configured to allocate the target address block to the service node, and set the target address block to an occupied state, so that the service node updates a local address pool according to the target address block, and performs address allocation or release for user equipment based on the local address pool;
an obtaining module, configured to: when a preset recycling trigger condition is met, obtain, by the address allocation device, recycling information reported by the service node, wherein the recycling information is used to indicate a location of a recycling address block in an idle state in the local address pool; and
a recycling module, configured to determine, according to the recycling information, an address block that is in the global address pool and corresponding to the recycling address block, and set the corresponding address block to an idle state.

5. The device according to claim 4, wherein the determining module is specifically configured to search, by moving a preset allocation sliding window, the global address pool for one or more address blocks in an idle state whose lengths are greater than or equal to N, wherein the allocation sliding window is a sliding block whose length is equal to M, M is an integer greater than 0, and N≥M.

6. The device according to claim 4 or 5, wherein the determining module is further configured to generate an index entry according to a header address, a tail address, a length, and a status identifier that are of the target address block, and save the index entry, wherein the index entry is used to indicate a location and a status that are of the target address block.

7. A service node, comprising:
a sending module, configured to send an address allocation request to an address allocation device;
a receiving module, configured to receive a target address block that is in the global address pool and returned by the address allocation device according to the address allocation request, and update a local address pool according to the target address block;
a processing module, configured to perform address allocation and release for user equipment based on the updated local address pool;
a generation module, configured to: when a preset recycling trigger condition is met, determine a recycling address block in an idle state in the local address pool, and generate recycling information according to the recycling address block, wherein the recycling information indicates a location of the recycling address block in an idle state in the local address pool; and
a report module, configured to report the recycling information to the address allocation device.

8. The node according to claim 7, wherein the generation module comprises:
a query unit, configured to query whether there are one or more address blocks in an idle state whose lengths are greater than or equal to a preset length threshold in the local address pool; and
a selection unit, configured to: if a query result of the query unit is that there are one or more address blocks in an idle state whose lengths are greater than or equal to the preset length threshold in the local address pool, select, from the one or more address blocks in an idle state whose lengths are greater than or equal to the length threshold, a longest address block as the recycling address block.

9. The node according to claim 8, wherein the query unit is specifically configured to search, by moving a preset recycling sliding window, the local address pool for one or more address blocks in an idle state whose lengths are greater than or equal to the length threshold, wherein the recycling sliding window is a sliding block whose length is equal to the length threshold.

10. An address allocation system, comprising the address allocation device according to any one of claims 4 to 6 and the service node according to any one of claims 7 to 9.
